# EUROPEAN PATENT SPECIFICATION

(11) **EP 2 311 654 B1**
(45) Date of publication and mention of the grant of the patent: **10.07.2013**
(21) Application number: 11151989.8
(22) Date of filing: 14.03.2007
(51) Int. Cl.: B60C 11/01, B60C 13/02

(54) **Pneumatic tire**
Luftreifen
Pneu

(30) Priority: 16.03.2006 JP 2006072759; 05.04.2006 JP 2006103764
(43) Date of publication of application: 20.04.2011
(62) Divisional of application: 08008986.5
(73) Proprietor: THE YOKOHAMA RUBBER CO., LTD., Tokyo 105-8685 (JP)
(72) Inventor: Maruyama, Hirokatsu, Kanagawa 254-8601 (JP); Oyama, Toshiro, Kanagawa 254-8601 (JP)
(74) Representative: HOFFMANN EITLE

(56) References cited:
- WO-A-2006/130944
- DE-A1- 1 756 749
- GB-A- 178 496
- US-A- 3 568 747
- US-A- 5 213 285

## Description

### BACKGROUND OF THE INVENTION

The present invention relates to pneumatic tires, and more particularly, to a pneumatic tire which can improve a problem of chipping and cracking while preventing water droplets from being thrown.

When vehicles travel on wet road surfaces on rainy days or the like, water droplets are thrown from rotating tires of the vehicles, and the water droplets thrown impairs the sight of drivers of vehicles traveling behind, which badly affects on traveling safety of the vehicles. In particular, when vehicles such as trucks and buses travel on wet road surfaces, water droplets are highly thrown therefrom, which exerts an influence on vehicles traveling behind. Recently, there has been proposed a pneumatic tire having an annular projection for preventing water droplets from being thrown on the outer surface of a sidewall portion on the tread portion side thereof as prevention means (see Japanese Patent Application *Kokai* Publication No. 2000-318410, for example).

However, pneumatic tires used for trucks and buses often run on steps such as curbs, and the angular projection may come into contact with the steps. When the annular projection comes into contact with a step, a strong tensile stress acts in the contact portion; therefore, a problem is that the contact portion is apt to be chipped by breaking thereof. The annular projection receives compression and tension repeatedly during running of the tire on road surfaces; therefore, another problem is that cracks are apt to occur in a boundary part between the annular projection and the outer surface of the sidewall portion with deterioration of the rubber of the sidewall portion arising from deterioration with age.

US 3568747 A; DE 1756749 A1; US 5213285 A; and WO2006/130944 A disclose aircraft tires having curvilinear projections or pockets arranged to act as airfoils to cause rotation of the tire prior to landing, or to dissipate water on the runway to improve braking.

GB 178496 A discloses a tyre cover provided with studs or projections on its side walls to prevent impact damage from stones or rocks.

### SUMMARY OF THE INVENTION

According to the present invention, there is provided a pneumatic tire having a tread portion, sidewall portions and means for preventing water droplets from being thrown during travelling on a wet road surface, the prevention means being provided on an outer surface of a sidewall portion on the tread portion side thereof, the prevention means having a plurality of projection pieces extending in a circumferential direction of the tire, the plurality of projection pieces being circularly arranged on the outer surface of the sidewall portion in such a manner that the plurality of projection pieces extend in an inclined manner with respect to the circumferential direction of the tire, the projection pieces adjacent to each other being placed so as to partially overlap each other when viewed in the radial direction of the tire so that there is no space between projection pieces adjacent to each other when viewed in a radial direction of the tire, the projection pieces extending in the shape of circular arcs, wherein the tread portion has a tread surface, and the plurality of projection pieces each have opposite longitudinal ends, the plurality of projection pieces each being gradually lower in projection height from one longitudinal end thereof nearer to the tread surface toward the other longitudinal end thereof.

An advantage obtainable with embodiments of the present invention is to provide a pneumatic tire which can improve a problem of chipping and cracking while preventing water droplets from being thrown.

With embodiments of the present invention described above, since the means for preventing water droplets from being thrown during traveling on a wet road surface comprises a plurality of projection pieces, the projection pieces can be lower in rigidity than the conventional annular projection. Therefore, when the projection pieces come into contact with steps such as curbs, the projection pieces can flex to thereby moderate tensile forces acting on the contact portions; thus, the contact portions are not easily broken, enabling an increase in chipping resistance.

Since the projection pieces can flex easily also when the projection pieces receive compression and tension repeatedly during running of the tire on road surfaces, cracks are not easily created in boundary parts between the projection pieces and the outer surface of the sidewall portion.

By placing the projection pieces in such a manner that there is no space between projection pieces adjacent to each other when viewed in the radial direction of the tire, even if water droplets are thrown at any position from the tire rotating, the water droplets strike the projection pieces; therefore, water droplets can be prevented from being thrown.

### BRIEF DESCRIPTION OF THE DRAWINGS

To enable a better understanding of the present invention, and to show how the same may be carried into effect, reference will now be made, by way of example only, to the accompanying drawings, in which:-
FIG. 1 is a partial cross-sectional view showing an embodiment of a pneumatic tire according to the present invention taken in a plane that contains the axis of rotation of the tire;
FIG. 2 is a schematic side view of the pneumatic tire of FIG. 1 at the time of contact of the tire with a ground;
FIG. 3 is a partially cross-sectional and perspective view of the pneumatic tire of FIG. 1;
FIG. 4 is a partial cross-sectional view of the pneumatic tire of FIG. 1 at the time of contact of the tire with a ground;
FIG. 5 is an explanatory drawing of projection pieces viewed from the outer side of the radial direction of the tire;
FIG. 6 is a partial cross-sectional view showing an example of a pneumatic tire useful for understanding the present invention, taken in a plane that contains the axis of rotation of the tire;
FIG. 7 is a partial cross-sectional view of the pneumatic tire of FIG. 6 at the time of contact of the tire with a ground;
FIG. 8 is an explanatory drawing of two rows of projection pieces viewed from the projection end side of the projection pieces;
FIG. 9 is a drawing taken along line Z-Z of FiG. 8; and
FIG. 10 is a partial cross-sectional view of the pneumatic tire of FIG. 6 at the time of contact of the tire with a ground.

### DETAILED DESCRIPTION

Embodiments of the present invention will be described in detail below with reference to the drawings.

Referring to FIG, 1, there is shown an embodiment of a pneumatic tire according to the present invention, which is an example of a heavy duty pneumatic tire used for trucks and buses; reference numeral 1 denotes a tread portion, and reference numeral 2 denotes a sidewall portion. A carcass ply 3 extends between right and left bead portions (not shown), and the opposing ends of the carcass ply 3 are turned up from the inner side of the tire toward the outer side thereof around bead cores (not shown) embedded in the bead portions. A plurality of belt plies 4 are provided radially outwardly of the carcass ply 3 in the tread portion 1. The tread portion 1 has a tread surface 1A, and a plurality of main grooves 5 extending in the circumferential direction of the tire are provided in the tread surface 1A.

Means 6 for preventing water droplets from being thrown during traveling on wet road surfaces is provided in a region of the outer surface 2a of each sidewall portion 2 facing the edges 4e of the belt plies 4, the region being located on the tread portion 1 side of the sidewall portion 2 and radially outwardly of the maximum width position S of the tire (measurement position of a tire cross-sectional width specified by JATMA) on the outer surface 2a of the sidewall portion 2. The prevention means 6 comprises a plurality of projection pieces 7 of rubber which integrally protrude from the outer surface 2a of the sidewall portion 2.

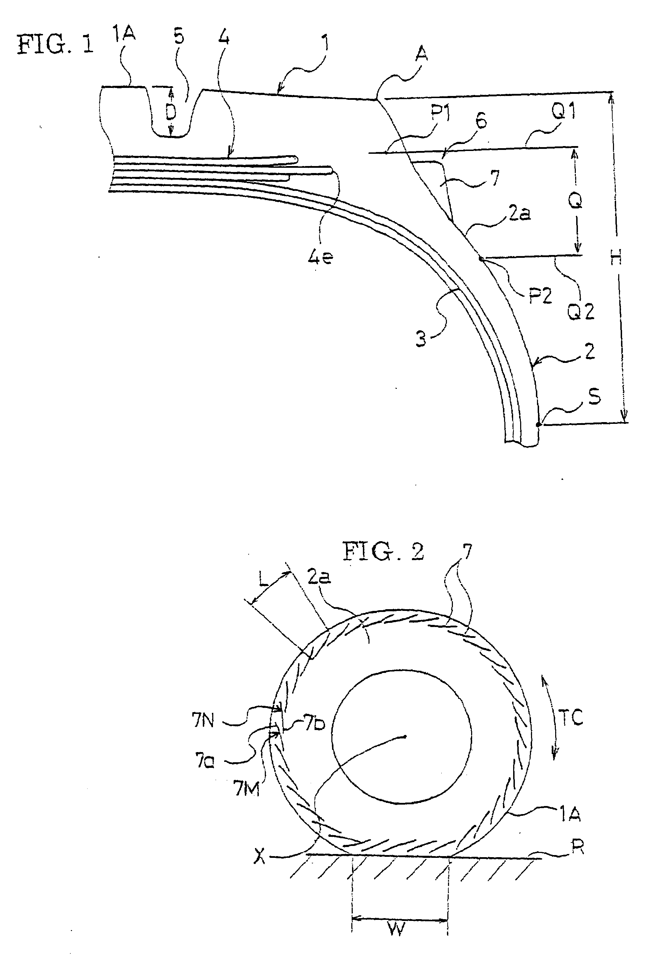

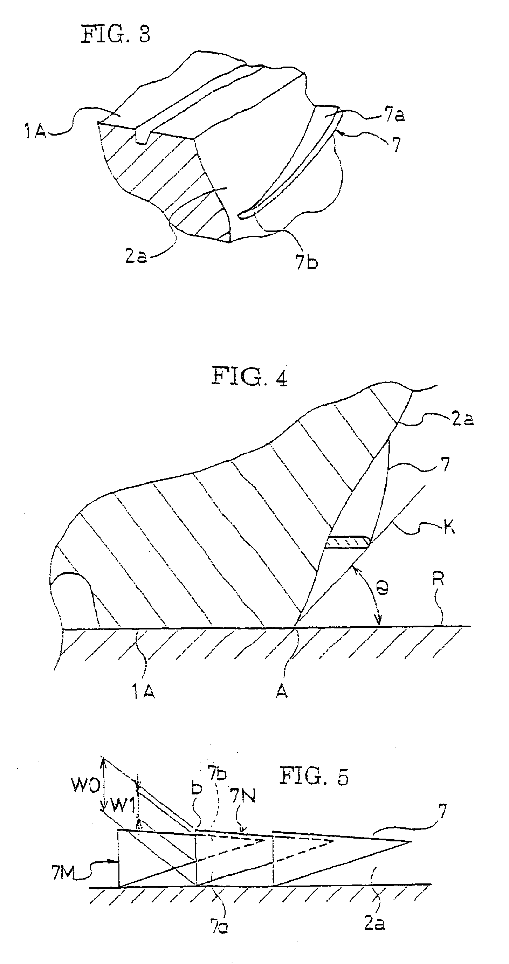

As shown in FIGS. 2 and 3, each of the projection pieces 7 extends in a manner inclined to one side with respect to the circumferential direction TC of the tire, and protrudes in the form of a triangle in such a manner that the projection piece 7 has a projection height which is gradually less from one longitudinal end 7a thereof nearer to the tread surface 1A toward the other longitudinal end 7b thereof. This allows the used amount of rubber to be reduced on the other longitudinal end 7b side of the projection piece 7, which avoids largely interrupting heat release from the edges 4e of the belt plies 4.

The plurality of projection pieces 7 include projection pieces 7M and 7N adjacent to each other and are circularly arranged in the circumferential direction TC of the tire in such a manner that the other longitudinal end 7b of one projection piece 7M of the projection pieces 7M and 7N partially overlaps the one longitudinal end 7a of the other projection piece 7N when viewed in the radial direction of the tire; the plurality of projection pieces 7 are disposed such that there is no space between the projection pieces 7M and 7N adjacent to each other when viewed in the radial direction of the tire.

The means 6 for preventing water droplets from being thrown during traveling on wet road surfaces comprises a plurality of projection pieces 7, whereby the projection pieces 7 can be lower in rigidity than the conventional annular projection; therefore, when the projection pieces 7 come into contact with steps such as curbs, the projection pieces 7 can flex to thereby moderate tensile forces acting on the contact portions. As a result, the contact portions are not easily broken, enabling an increase in chipping resistance.

Since the projection pieces 7 can flex easily also when the projection pieces 7 receive compression and tension repeatedly during running of the tire on road surfaces, cracks do not easily occur in boundary parts between the projection pieces 7 and the outer surface 2a of the sidewall portion 2.

The projection pieces 7 are circularly placed such that the projection pieces 7M and 7N adjacent to each other partially overlap each other, whereby there is no space between the projection pieces 7M and 7N adjacent to each other when viewed in the radial direction of the tire; therefore, even if water droplets are thrown at any position from the tire rotating, the water droplets strike the projection pieces 7, enabling throwing of the water droplets to be prevented.

In the first embodiment described above, the tire circumferential length L (mm) of each projection piece 7 measured on the outer surface 2a of the sidewall portion 2 is preferably 0.6W or less with respect to the maximum ground contact length W (mm) of the tire when the tire is contacted with a road surface R. If the tire circumferential length L of the projection piece 7 exceeds 0.6W, the contact portion of the projection piece 7 is apt to break because the projection piece 7 is so long in the circumferential direction TC of the tire that the tire circumferential rigidity of the projection piece 7 is high. The lower limit of the tire circumferential length L of the projection piece 7 is preferably 0.1W or more in terms of fabrication.

The projection pieces 7 are preferably disposed in a region Q (see FIG. 1) of the outer surface 2a of the sidewall portion 2 located between straight lines Q1 and Q2; in cross section shown in FIG. 4 taken in a plane contains the axis of rotation of the tire when the tire is contacted with the road surface R, the straight line Q1 passes a position P1 which is 150% of the groove depth D of the main grooves 5 away inwardly in a radial direction of the tire perpendicular to the axis X of rotation of the tire from a tire ground contact end A of the tread surface 1A on the sidewall portion 2 side, and is parallel to the axis X of rotation of the tire, and the straight line Q2 passes a center position P2 on the outer surface 2a of the sidewall portion 2 between the tire ground contact end A and the tire maximum width position S, and is parallel to the axis X of rotation of the tire.

By disposing the projection pieces 7 radially inwardly of the tire from the position P1 of 150% of the groove depth D of the main grooves 5, an effect of the projection pieces 7 that prevent water droplets from being thrown can be obtained until the main grooves 5 disappear by reaching of tread wear life. By disposing the projection pieces 7 radially outwardly of the tire from the center position P2 between the tire ground contact end A and the tire maximum width position S, the projection height of the projection pieces 7 is kept low to thereby allow the amount of rubber used for the projection pieces 7 to be less, while ensuring the effect of preventing water droplets from being thrown. Preferably, the projection pieces 7 are provided in a region of the outer surface 2a of the sidewall portion 2 facing the edges 4e of the belt plies 4, because the projection height of the projection pieces 7 is kept lower to thereby allow the amount of rubber used for the projection pieces 7 to be further iess while ensuring the effect of preventing water droplets from being thrown.

In cross section taken in a plane contains the axis of rotation of the tire when the tire is contacted with the road surface R, if K is the tangent line drawn to the surface of the projection piece 7 from the tire ground contact end A, the angle θ of the tangent line K with respect to the road surface R is preferably equal to or less than 45 degrees in terms of effectively preventing water droplets from being thrown. It should be noted that the projection pieces 7 are arranged such that they do not protrude beyond the tire maximum width position S in the axial direction of the tire.

As shown in FIG. 5, one projection piece 7M of the projection pieces 7M and 7N adjacent to each other is preferably gradually lower in projection height in such a manner that the projection height W1 of the one projection piece 7M at the overlapping boundary position b thereof is equal to or greater than 30% of the maximum projection height W0 of the one longitudinal end 7a of the other projection piece 7N. in the region Q of the outer surface 2a described above, the outer surface 2a gradually protrudes axially more outwardly of the tire toward the tire radially inner side. Therefore, the projection height W1 of the one projection piece 7M at the overlapping boundary position b is at least 0.3W0, resulting in that the effect of preventing water droplets from being thrown can be ensured.

The projection pieces 7 extend in the shape of circular arcs, as shown in FIGS. 2 and 3. It is sufficient for the projection pieces 7 to be provided on one sidewall portion 2 located on the outer side of a vehicle when the tire is mounted thereon; however, the projection pieces 7 may be provided on each sidewall portion 2 as described above.

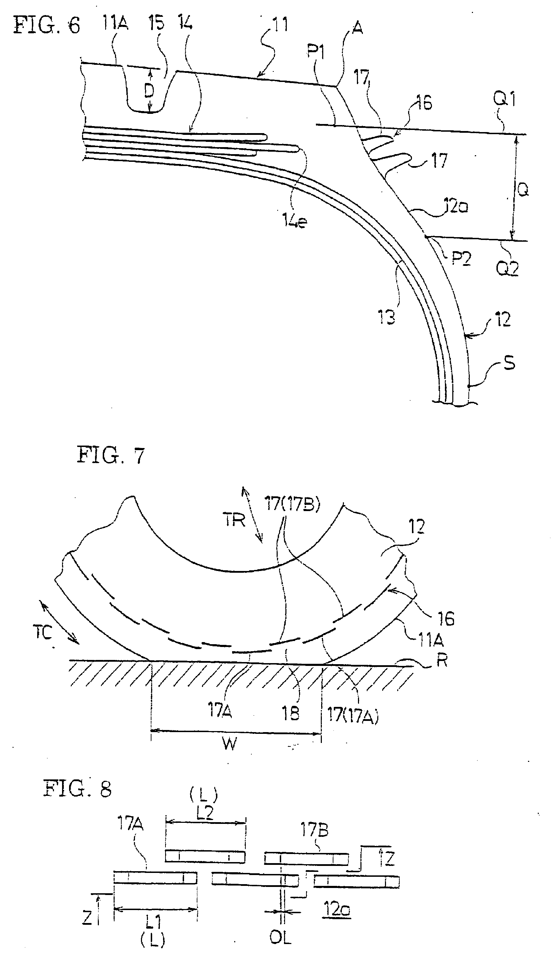

Referring to FIG. 6, there is shown an example of a pneumatic tire useful for understanding the present invention, which is an example of a heavy duty pneumatic tire used for trucks and buses: reference numeral 11 denotes a tread portion, and reference numeral 12 denotes a sidewall portion. A carcass ply 13 extends between right and left bead portions (not shown), and the opposing ends of the carcass ply 13 are turned up from the inner side of the tire toward the outer side thereof around bead cores (not shown) embedded in the bead portions. A plurality of belt plies 14 are provided radially outwardly of the carcass ply 13 in the tread portion 11. The tread portion 11 has a tread surface 11 A, and a plurality of main grooves 15 extending in the circumferential direction of the tire are provided in the tread surface 11A.

Means 16 for preventing water droplets from being thrown during traveling on wet road surfaces is provided in a region of the outer surface 12a of each sidewall portion 12 facing the edges 14e of the belt plies 14, the region being located on the tread portion 11 side of the sidewall portion 12 and radially outwardly of the maximum width position S of the tire (measurement position of a tire cross-sectional width specified by JATMA) on the outer surface 12a of the sidewall portion 12. The prevention means 16 comprises a plurality of projection pieces 17 of rubber which integrally protrude from the outer surface 12a of the sidewall portion 12.

As shown in FIG. 7, each of the projection pieces 17 extends along the circumferential direction TC of the tire; the plurality of projection pieces 17 are intermittently circularly arranged in the circumferential direction TC of the tire in two rows. The two rows of projection pieces 17 comprise one row of projection pieces 17A near the tread surface 11A and the other row of projection pieces 17B remote from the tread surface 11A.

The one row of projection pieces 17A and the other row of projection pieces 17B are disposed with offset to each other in the circumferential direction TC of the tire in such a manner that a projection piece 17A and a projection piece 17B adjacent thereto partially overlap each other when viewed in the radial direction of the tire; there is no space between the projection pieces 17A and 17B adjacent to each other, in other wards, the plurality of projection pieces 17 are disposed such that spaces 18 between the projection pieces 7A of the one row are blocked by the projection pieces 17A of the other row. The other row of projection pieces 17B remote from the tread surface 11 A protrude radially more outwardly of the tire than the one row of projection pieces 17A near the tread surface 11A, and are designed to block water droplets from being throw through the spaces 18 between the projection pieces 17A.

As shown in FIG. 8, the tire circumferential length L2 (mm) of the projection pieces 17B of the other row measured on the outer surface 2a of the sidewall portion 2 is less than the tire circumferential length L1 (mm) of the projection pieces 17A of the one row measured on the outer surface 2a of the sidewall portion 2. Since the projection pieces 7B of the other row are greater in projection than the projection pieces 17A of the one row, the mount of rubber used for the projection pieces 17B of the other row is greater than that used for the projection pieces 17A of the one row. Therefore, by making the tire circumferential length L2 of the projection pieces 17B of the other row less than the tire circumferential length L1 of the projection pieces 17A of the one row, the amount of rubber used for the projection pieces 17B of the other row is kept less, suppressing an increase in weight.

According to the example described above also, the means 16 for preventing water droplets from being thrown during traveling on wet road surfaces comprises a plurality of projection pieces, 17, whereby the projection pieces 17 can be lower in rigidity than the conventional annular projection; therefore, when the projection pieces 17 come into contact with steps such as curbs, the projection pieces 17 can flex to thereby moderate tensile forces acting on the contact portions; accordingly, the contact portions are not easily broken, enabling an increase in chipping resistance.

Since the projection pieces 17 can flex easily also when the projection pieces 17 receive compression and tension repeatedly during running of the tire on road surfaces, cracks do not easily occur in boundary parts between the projection pieces 17 and the outer surface 12a of the sidewall portion 12.

The plurality of projection pieces 17 are placed without spaces when viewed in the radial direction of the tire; therefore, even if water droplets are thrown at any position from the tire rotating, the water droplets strike the projection pieces 17, enabling throwing of the water droplets to be prevented.

In the example described above, the tire circumferential length L (mm) of each projection piece 17 measured on the outer surface 12a of the sidewall portion 12 is preferably 0.6W or less with respect to the maximum ground contact length W (mm) of the tire when the tire is contacted with a road surface R. If the tire circumferential length L of the projection piece 17 exceeds 0.6W, the contact portion of the projection piece 17 is apt to break because the projection piece 17 is so long in the circumferential direction TC of the tire that the tire circumferential rigidity of the projection piece 17 is high. The lower limit of the tire circumferential length L of the projection piece 17 is preferably 0.1W or more in terms of fabrication.

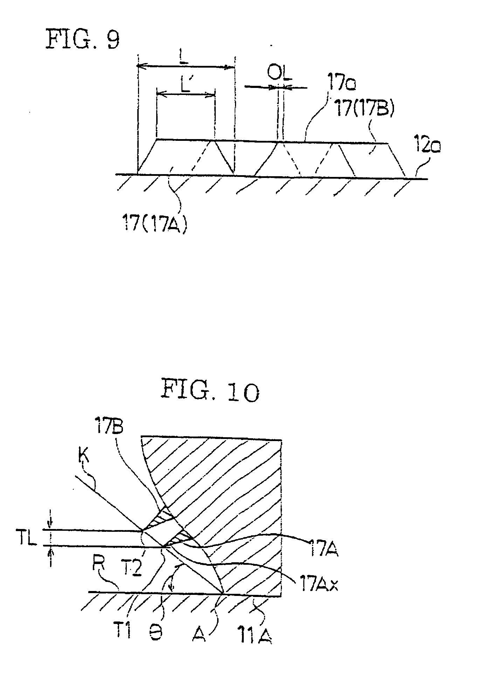

As shown in FIG. 9, it is preferable in terms of an increase in chipping resistance that the projection pieces 17 be gradually shorter in tire circumferential length toward the projection ends 17a thereof. The ratio L'/L of the tire circumferential length L' of the projection ends 17a of the projection pieces 17 to the tire circumferential length L of the projection pieces 17 measured on the outer surface 12a of the sidewall portion 2 is preferably equal to or less than 0.8 in terms of effectively improving chipping resistance of the projection pieces 17. The lower limit of the ratio L'/L is preferably equal to or greater than 0.5 from the viewpoint of an increase in weight and maintenance of the effect of preventing water droplets from being thrown.

As shown in FIG. 10, in cross section taken in a plane contains the axis of rotation of the tire when the tire is contacted with the road surface R, if K is the tangent line drawn to the surface of a projection piece 17A of the one row from a tire ground contact end A of the tread surface 11A on the sidewall 12 side thereof, the projection pieces 17B of the other row are each preferably arranged so as to protrude to a position where the tangent line K passes as shown in FIG. 10, or beyond the position axially outwardly of the tire from the viewpoint of an increase in effect of the projection pieces 17B of the other row that prevent water droplets from being thrown. The angle θ of the tangent fine K with respect to the road surface R is preferably equal to or less than 45 degrees.

It is preferable from the viewpoint of ensuring a high effect of preventing water droplets from being throw that the overlap length OL (mm) of projection pieces 17A and 178 adjacent to each other be 0 or more when viewed in a direction where the tangent line K extends, and the ratio TL/OL satisfy a formula expressed by 0<TL/OL≦3, TL being the distance between contact points T1 and T2 when measured in a direction perpendicular to the axis of rotation of the tire, T1 being the contact point of the projection piece 17A with the tangent line K, T2 being the contact point of a tangent line drawn to the projection end surface of a projection piece 17B of the other row from the tire ground contact end A with the projection piece 17B. It should be noted that the overlap length OL of the projection pieces 17A and 17B is a tire circumferential length at a position where the area of overlapping is the least in tire circumferential length.

As in the embodiment of FIGS. 1 to 5, the projection pieces 17 are preferably disposed in a region Q of the outer surface 12a of the sidewall portion 12 located between straight lines Q1 and Q2; in cross section taken in a plane contains the axis of rotation of the tire when the tire is contacted with the road surface R, the straight line Q1 passes a position P1 which is 150% of the groove depth D of the main grooves 15 away inwardly in a radial direction of the tire perpendicular to the axis of rotation of the tire from the tire ground contact end A, and is parallel to the axis of rotation of the tire, and the straight line Q2 passes a center position P2 on the outer surface 1 2a of the sidewall portion 12 between the tire ground contact end A and the tire maximum width position S, and is parallel to the axis of rotation of the tire. Preferably, the projection pieces 17 are provided in a region of the outer surface 12a of the sidewall portion 12 facing the edges 14e of the belt plies 14, because the projection height of the projection pieces 17 is kept lower to thereby allow the amount of rubber used for the projection pieces 17 to be further less while ensuring the effect of preventing water droplets from being thrown.

The projection pieces 17 are preferably arranged in two rows as shown in the example of FIGS. 6 to 10 described above; however, the projection pieces 17 may be arranged in three rows or more; it suffices for the projection pieces 17 to be intermittently circularly arranged in the circumferential direction TC of the tire in at least two rows with the projection pieces 17A and 17B being offset to each other.

It is sufficient for the projection pieces 17 also to be provided on one sidewall portion 12 located on the outer side of a vehicle when the tire is mounted thereon; however, the projection pieces 17 may be provided on each sidewall portion 12 as described above.

The present invention is preferably applicable to heavy duty pneumatic tires used for trucks, buses and the like in particular; however, the present invention is not limited thereto but is also applicable to pneumatic tires for passenger cars or the like.

It should be noted that "when a tire is contacted with a road surface" referred in the present invention is when a tire is contacted with a road surface under conditions of an air pressure corresponding to the maximum load capacity written in JATMA (JATMA YEAR BOOK 2005), and a load that is the same as the maximum load capacity.

### EXAMPLE 1

Prepared were test tires according to the present invention tires 1 to 3 (present examples 1 to 3), and conventional tire (conventional example), each having a tire size of 275/80R22.5; the present invention tires 1 to 3 each have a construction shown in FIGS. 1 and 2 in which the projection pieces, which extends in an inclined manner in the circumferential direction of the tire on the outer surface of a sidewall portion, are circularly arranged in the circumferential direction of the tire with projection pieces adjacent to each other partially overlapping: the conventional tire has the same construction as the present invention tire 1 except that a circular projection is placed instead of the projection pieces.

In each of the present invention tires, the projection height W1 of the projection pieces is 50% of the maximum projection height W0 thereof, and the projection pieces each extends in an inclined manner from the position P1 of 150% of the groove depth D of the main grooves to a position radially outward of the tire by 0.12H from the center position P2, H being the tire radial length between the tire ground contact length A and the tire maximum width position S. The tire circumferential lengths L of the projection pieces of the present invention tires are as shown in Table 1.

The test tires were seated on 22.5x7.50 sized rims, inflated to air pressure of 900 kPa, mounted on a truck having a gross weight of 25 ton, and subjected to evaluation testing for characteristics of preventing water droplets from being thrown and chipping resistance according to the following methods, obtaining the results shown in Table 1.

### Water Droplet Throw Prevention Characteristics

When the test tires were run straight on a wet test road surface, the states of water droplets thrown were visually inspected and evaluated by ten test examiners.

The evaluation results are represented by an index where the conventional tire is 100. As the index value is greater, characteristics of preventing water droplets from being thrown is better.

### Chipping Resistance

Testing of running on a curb having a height of 200 mm was carried out on the test tires 20 times repeatedly, and thereafter, the number of parts of the projection pieces or circular projection where chipping of rubber occurred was counted.

The results of evaluating chipping resistance from the occurrence number are represented by an index where the conventional tire is 100. As the index value is greater, chipping resistance is better.

**[Table 1]**

| | Conventional Example | Present Example 1 | Present Example 2 | Present Example 3 |
|---|---|---|---|---|
| Tire Circumferential Length L | -- | 0.10W | 0.35W | 0.60W |
| Water Droplet Throw Prevention Characteristics | 100 | 100 | 100 | 100 |
| Chipping Resistance | 100 | 130 | 120 | 110 |

As can be seen from Table 1, the present invention tires can improve chipping resistance while preventing water droplets from being thrown.

### EXAMPLE 2

Prepared were test tires according to the above-described example tires 4 to 9 (present examples 4 to 9), conventional tire (conventional example), and comparison tire (comparative example), each having a tire size of 275/80R22.5; the present example tires 4 to 9 each have a construction shown in FIGS. 6 and 7 in which the projection pieces are circularly arranged in the circumferential direction of the tire in two rows on the outer surface of a sidewall portion with projection pieces of the two rows being offset to each other in the circumferential direction of the tire; the conventional tire has the same construction as the present example tire 4 except that a circular projection is placed instead of the projection pieces; the comparison tire has the same construction as the conventional tire except that projection pieces are intermittently arranged in the circumferential direction of the tire in one row instead of the circular projection.

In each of the present invention tires, the tire circumferential length L of the projection pieces, ratio L'/L, ratio TL/OL, and the position of the projection ends of the projection pieces of the other row remote from the tread surface are as shown in Table 2.

In the comparison tire, the tire circumferential length L of the projection pieces and ratio L'/L are as shown in Table 2.

The test tires were subjected to evaluation testing for characteristics of preventing water droplets from being thrown and chipping resistance as in Example 1, obtaining the results shown in Table 2.

**[Table 2]**

| | Conventional Example | Comparative Example | Present Example 4 | Present Example 5 |
|---|---|---|---|---|
| Tire Circumferential Length L | - | 0.5W | 0.7W | 0.6W |
| Ratio L'/L | - | 0.8 | 1.0 | 1.0 |
| Ratio TL/OL | - | - | 3.0 | 3.0 |
| Position of Projection Ends of Projection Pieces of the Other Row | - | - | On Tangent Line K | On Tangent Line K |
| Water Droplet Throw Prevention Characteristics | 100 | 60 | 100 | 100 |
| Chipping Resistance | 100 | 120 | 105 | 110 |
| | Present Example 6 | Present Example 7 | Present Example 8 | Present Example 9 |
| Tire Circumferential Length L | 0.6W | 0.5W | 0.5W | 0.5W |
| Ratio L'/L | 10.8 | 0.7 | 0.8 | 0.8 |
| Ratio TL/OL | 2.0 | 1.0 | 4.0 | 2.0 |
| Position of Projection Ends of Projection Pieces of the Other Row | Outwardly of Tangent Line K | On Tangent Line K | On Tangant Line K | inwardly of Tangent Line K |
| Water Droplet Throw Prevention Characteristics | 100 | 100 | 90 | 95 |
| Chipping Resistance | 120 | 125 | 120 | 120 |

As can be seen from Table 2, the present example tires can improve chipping resistance while characteristics of preventing water droplets from being thrown are 90 or more, enabling characteristics of preventing water droplets from being thrown to be ensured.

## Claims

1. A pneumatic tire having a tread portion (1), sidewall portions (2) and means (6) for preventing water droplets from being thrown during travelling on a wet road surface, the prevention means (6) being provided on an outer surface of a sidewall portion (2) on the tread portion side thereof, the prevention means (6) having a plurality of projection pieces (7) extending in a circumferential direction of the tire, the plurality of projection pieces (7) being circularly arranged on the outer surface of the sidewall portion (2)in such a manner that the plurality of projection pieces (7) extend in an inclined manner with respect to the circumferential direction of the tire, the projection pieces (7) adjacent to each other being placed so as to partially overlap each other when viewed in the radial direction of the tire so that there is no space between projection pieces (7) adjacent to each other when viewed in a radial direction of the tire, the projection pieces extending in the shape of circular arcs,
wherein the tread portion (1) has a tread surface, and the plurality of projection pieces each have opposite longitudinal ends, the plurality of projection pieces each being gradually lower in projection height from one longitudinal end thereof nearer to the tread surface toward the other longitudinal end thereof.

2. A pneumatic tire according to claim 1, wherein the other longitudinal end of one of the projection pieces adjacent to each other overlap the one longitudinal end of the other thereof, the one projection piece being gradually lower in projection height in such a manner that a projection height of the one projection piece at an overlapping boundary position thereof is 30% or more of a maximum height WO of the one longitudinal end of the other projection piece.

3. A pneumatic tire according to Claim 1 or 2, wherein the tread portion (11) has a tread surface, the tread surface having a main groove (15) extending in the circumferential direction of the tire and a tire ground contact end on the sidewall portion side thereof, the plurality of projection pieces being disposed in a region of the outer surface of the sidewall portion located between straight lines Q1 and Q2, the straight line Q1 passing a position P1 which is 150% of a groove depth of the main groove away inwardly in a radial direction of the tire perpendicular to an axis of rotation of the tire from the tire ground contact end, and being parallel to the axis of rotation of the tire, the straight line Q2 passing a center position P2 between the tire ground contact end and a maximum width position S of the tire on the outer surface of the sidewall portion, and being parallel to the axis of rotation of the tire.

## Patentansprüche

1. Pneumatischer Reifen, der einen Laufflächenabschnitt (1), Seitenwandabschnitte (2) und Mittel (6) zum Vermeiden, dass Wassertröpfchen während der Fahrt auf einer nassen Fahrbahnoberfläche weggeschleudert werden, aufweist, wobei die Vermeidungsmittel (6) auf einer Außenoberfläche eines Seitenwandabschnitts (2) auf der Seite des Laufflächenabschnitts davon vorgesehen sind, und die Vermeidungsmittel (6) eine Vielzahl von Vorsprungsteilen (7) aufweisen, die sich in einer Umfangsrichtung des Reifens erstrecken, wobei die Vielzahl von Vorsprungsteilen (7) auf eine solche Weise kreisförmig auf der Außenoberfläche des Seitenwandabschnitts (2) angeordnet sind, dass die Vielzahl von Vorsprungsteilen (7) sich bezüglich der Umfangsrichtung des Reifens auf eine schräge Weise erstrecken, die zueinander benachbarten Vorsprungsteile (7) so angeordnet sind, dass diese sich teilweise überlappen, wenn aus der radialen Richtung des Reifens betrachtet, sodass kein Raum zwischen zueinander benachbarten Vorsprungsteilen (7) vorhanden ist, wenn aus der radialen Richtung des Reifens betrachtet, und die Vorsprungsteile sich in der Form kreisförmiger Bögen erstrecken,
wobei der Laufflächenabschnitt eine Laufflächenoberfläche aufweist und die Vielzahl von Vorsprungsteilen jeweils gegenüberliegende Längsenden aufweisen,
die Vielzahl von Vorsprungsteilen bezüglich der Projektionshöhe von einem Längsende davon, das näher an der Laufflächenoberfläche liegt, zum anderen Längsende davon allmählich niedriger wird.

2. Pneumatischer Reifen nach Anspruch 1, bei dem das andere Längsende von einem der zueinander benachbarten Vorsprungsteile das eine Längsende des anderen davon überlappt, wobei das eine Vorsprungsteil bezüglich der Vorsprungshöhe auf eine solche Weise allmählich niedriger wird, dass eine Vorsprungshöhe des einen Vorsprungsteils an einer überlappenden Grenzposition davon 30% oder mehr einer maximalen Höhe W0 des einen Längsendes des anderen Vorsprungsteils aufweist.

3. Pneumatischer Reifen nach Anspruch 1 oder 2, bei dem der Laufflächenabschnitt (11) eine Laufflächenoberfläche aufweist, die Laufflächenoberfläche eine Hauptrille (15), die sich in der Umfangsrichtung des Reifens erstreckt, und ein Reifenbodenkontaktende auf der Seite des Seitenwandabschnitts davon aufweist, wobei die Vielzahl von Vorsprungsteilen in einem Bereich auf der Außenoberfläche des Seitenwandabschnitts angeordnet ist, der zwischen geraden Linien Q1 und Q2 positioniert ist, die gerade Linie Q1 eine Position P1 durchläuft, die 150% einer Rillentiefe der Hauptrille nach innen weg in einer radialen Richtung des Reifens senkrecht zu einer Drehachse des Reifens von dem Reifenbodenkontaktende beträgt, und parallel zur Drehachse des Reifens verläuft, wobei die gerade Linie Q2 eine Zentrumsposition P2 zwischen dem Reifenbodenkontaktende und einer maximalen Breitenposition S des Reifens auf der Außenoberfläche des Seitenwandabschnitts durchläuft und parallel zur Drehachse des Reifens verläuft.

## Revendications

1. Bandage pneumatique ayant une partie formant bande de roulement (1), des parties formant flancs (2) et un moyen (6) pour empêcher des gouttelettes d'eau d'être projetées pendant un parcours sur une surface de route mouillée, le moyen de prévention (6) étant prévu sur une surface extérieure d'une partie formant flanc (2) sur le côté partie formant bande de roulement de celle-ci, le moyen de prévention (6) ayant une pluralité de pièces en saillie (7) s'étendant dans une direction circonférentielle du pneu, la pluralité de pièces en saillie (7) étant agencée de façon circulaire sur la surface extérieure de la partie formant flanc (2) de telle sorte que la pluralité de pièces en saillie (7) s'étende d'une façon inclinée par rapport à la direction circonférentielle du pneu, les pièces en saillie (7) adjacentes les unes aux autres étant placées de façon à partiellement se chevaucher lorsque l'on regarde dans la direction radiale du pneu de sorte qu'il n'y a aucun espace entre des pièces en saillie (7) adjacentes les unes aux autres lorsque l'on regarde dans une direction radiale du pneu, les pièces en saillie s'étendant en forme d'arcs circulaires,
dans lequel la partie formant bande de roulement (1) a une surface de bande de roulement, et chacune de la pluralité de pièces en saillie a des extrémités longitudinales opposées, chacune de la pluralité de pièces en saillie ayant une hauteur de saillie progressivement plus basse à partir d'une extrémité longitudinale de celle-ci plus proche de la surface de bande de roulement vers l'autre extrémité longitudinale de celle-ci.

2. Bandage pneumatique selon la revendication 1, dans lequel l'autre extrémité longitudinale d'une des pièces en saillie adjacentes les unes aux autres chevauche l'extrémité longitudinale particulière de l'autre de celle-ci, la pièce en saillie particulière ayant une hauteur de saillie progressivement plus basse de telle sorte qu'une hauteur de saillie de la pièce en saillie particulière au niveau d'une position de frontière de chevauchement de celle-ci est de 30 % ou plus d'une hauteur maximale W0 de l'extrémité longitudinale particulière de l'autre pièce en saillie.

3. Bandage pneumatique selon la revendication 1 ou 2, dans lequel la partie formant bande de roulement (11) a une surface de bande de roulement, la surface de bande de roulement ayant une rainure principale (15) s'étendant dans la direction circonférentielle du pneu et une extrémité de contact avec le sol de pneu sur le côté partie formant flanc de celui-ci, la pluralité de pièces en saillie étant disposée dans une zone de la surface extérieure de la partie formant flanc située entre des lignes droites Q1 et Q2, la ligne droite Q1 passant par une position P1 qui fait 150 % d'une profondeur de rainure de la rainure principale loin vers l'intérieur dans une direction radiale du pneu perpendiculaire à un axe de rotation du pneu à partir de l'extrémité de contact avec le sol de pneu, et étant parallèle à l'axe de rotation du pneu, la ligne droite Q2 passant par une position de centre P2 entre l'extrémité de contact avec le sol de pneu et une position de largeur maximale S du pneu sur la surface extérieure de la partie formant flanc, et étant parallèle à l'axe de rotation du pneu.
